# EUROPÄISCHE PATENTANMELDUNG

(11) **EP 1 160 106 A2**
(43) Veröffentlichungstag der Anmeldung: **05.12.2001**
(21) Anmeldenummer: 01113126.5
(22) Anmeldetag: 29.05.2001
(51) Int. Cl.: B60G 7/00

(54) **Lenker für ein Kraftfahrzeug**

(30) Priorität: 31.05.2000 DE 20009695 U
(71) Anmelder: BENTELER AG, D-33104 Paderborn (DE)
(72) Erfinder: Christophliemke, Wigbert, 33758 Schloss Holt-Stukenbrock (DE); Wang, Shaolin, Dr.-Ing., 34355 Spiekershausen (DE)
(74) Vertreter: Bockermann, Rolf, Dipl.-Ing.

(57) **Zusammenfassung**

Der Lenker 1 als Fahrwerkskomponente für ein Kraftfahrzeug ist als hohle Stahl-Konfiguration aus wenigstens teilweise gepressten, miteinander verschweißten Stahlblechen gebildet. Er ist mindestens abschnittsweise mit einem die Knicksteifigkeit erhöhenden inneren Verstärkungsblech 16 versehen.

## Beschreibung

In der Kraftfahrzeugindustrie werden zur Herstellung von Fahrwerkskomponenten bislang bevorzugt Baustähle eingesetzt. Baustähle bilden hierbei neben den Faktoren Kosten und Gewicht einen Kompromiss zwischen der Umformbarkeit und der Streckgrenze eines Stahls, da mit steigender Streckgrenze im allgemeinen die Umformbarkeit des Stahls verringert wird.

Aufgrund höherer Anforderungen an Fahrwerkskomponenten unter gleichzeitiger Berücksichtigung beschränkter Einbauräume und/oder Gewichtsreduzierungen hat man in der Praxis Lenker als hohle Stahl-Konfigurationen gestaltet. Hierbei wurden Pressteile, Rohre oder auch Profilstränge teilweise in Kombination, eingesetzt. Aufgrund der hohlen Konfigurationen konnte im Vergleich zu Massivstrukturen ein deutlich günstigeres Verhalten bei Biege- und Torsionsbeanspruchungen unter gleichzeitiger Verringerung des Gewichts erzielt werden. Auffallend war aber, dass das Knickverhalten von solchen Lenkern häufig sehr kritisch war, besonders wenn sich die Knickbeanspruchungen in mehrere Richtungen bemerkbar machten.

Der Erfindung liegt ausgehend vom Stand der Technik die Aufgabe zugrunde, einen Lenker als Fahrwerkskomponente für ein Kraftfahrzeug zu schaffen, der als hohle Stahl-Konfiguration unter Beachtung beschränkter Einbauräume und geringem Gewicht eine deutlich verbesserte Knicksteifigkeit aufweist.

Die Lösung dieser Aufgabe besteht in den Merkmalen des Anspruchs 1.

Unter Verwendung von zumindest teilweise gepressten und miteinander verschweißten, an die jeweilige Funktion eines Lenkers konfigurativ angepassten Stahlblechen ist es möglich, die Knicksteifigkeit dadurch wesentlich zu verbessern, dass die hohle Stahl-Konfiguration jeweils dort mit einem inneren Verstärkungsblech versehen ist, wo Knickbeanspruchungen in besonders relevanter Höhe auftreten können. Das Verstärkungsblech wird dabei in der Ebene angeordnet, in welcher sich die Knickbeanspruchungen auswirken. Ohne mithin sein Gewicht merklich zu erhöhen und ohne dass der zur Verfügung stehende Einbauraum im Fahrwerksbereich eingeschränkt wird, kann ein erfindungsgemäßer Lenker demzufolge deutlich stärkeren Knickbelastungen ausgesetzt werden.

Eine besonders vorteilhafte Ausführungsform der Erfindung besteht in den Merkmalen des Anspruchs 2. Danach setzt sich der Lenker aus einer U-förmig gemuldeten Schale, einem an die freien Enden der Schenkel der Schale geschweißten Querblech oder eine U-förmigen Gegenschale und einem seinen Innenraum im Bereich zwischen dem Boden der Schale und dem Querblech bzw. der Gegenschale durchsetzenden, zwischen die Schenkel geschweißten Verstärkungsblech zusammen.

Die U-förmig gemuldete Schale kann dabei hinsichtlich ihres Bodens, gegebenenfalls auch hinsichtlich ihrer Schenkel, durch sickenartige Verprägungen eine höhere Verwindungs- und Biegesteifigkeit erhalten. Das Verstärkungsblech wird vor der Festlegung des Querblechs bzw. der Gegenschale an die Schenkel der Schale geschweißt. Es kann wie das die Schale abschließende Querblech oder der Steg der Gegenschale eben ausgebildet oder gegebenenfalls mit sickenartigen Verprägungen versehen sein.

Durch die Integration einer derartigen Verstärkung kann das Gewicht eines Lenkers um ca. bis 15 % gesenkt werden. Die tragbaren Knickbelastungen erhöhen sich um mindestens 15 %.

Eine spezielle Ausführungsform der Erfindung besteht in den Merkmalen des Anspruchs 3. Danach ist der Lenker als etwa L-förmig konfigurierter Querlenker gestaltet. Er besitzt zwei im wesentlichen geradlinige Schenkel, die durch einen mittleren gekrümmten Längenbereich verbunden sind. Dieser Längenbereich ist meistens deshalb knickgefährdet, weil hier unter anderem eine Lagerstelle vorgesehen ist, die der Festlegung der Aufnahme eines Gummilagers dient. In diesen mittleren gekrümmten Längenbereich wird mithin bevorzugt das Verstärkungsblech eingeschweißt.

Die Erfindung ist nachfolgend anhand eines in den Zeichnungen dargestellten Ausführungsbeispiels näher erläutert. Es zeigen:
- Figur 1: in der Draufsicht im Schema einen Querlenker als Fahrwerkskomponente für ein Kraftfahrzeug;
- Figur 2: eine Ansicht auf den Querlenker in Richtung des Pfeils II der Figur 1;
- Figur 3: einen Querschnitt durch den Querlenker entlang der Linie III-III der Figur 1 in Richtung der Pfeile IIIa und
- Figur 4: einen Querschnitt durch den Querlenker entlang der Linie IV-IV der Figur 1 in Richtung der Pfeile IVa.

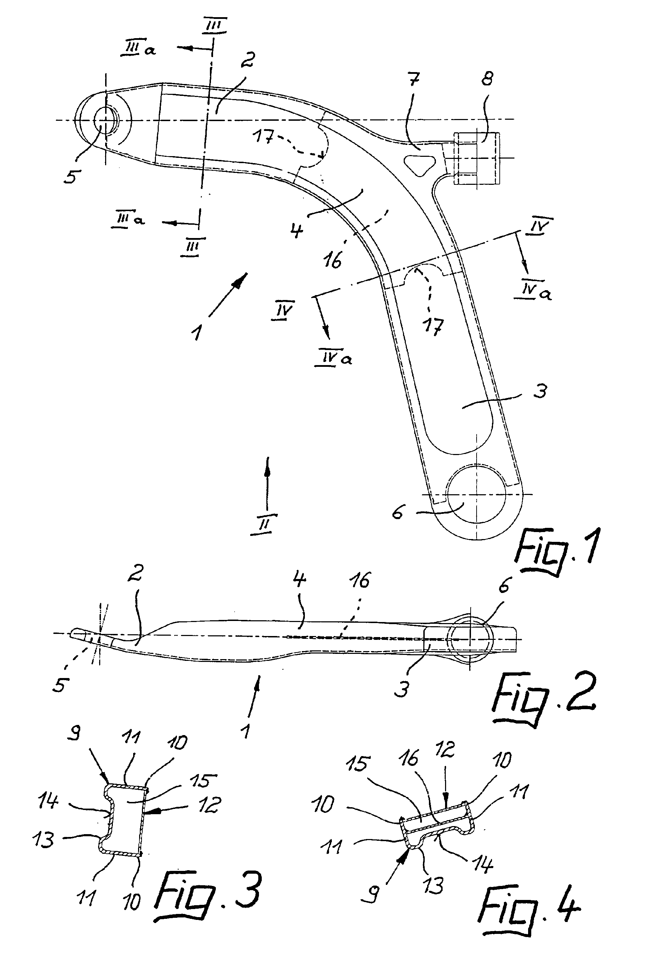

In den Figuren 1 und 2 ist mit 1 ein Lenker in Form eines Querlenkers als Fahrwerkskomponente für ein Kraftfahrzeug bezeichnet, der als hohle Stahl-Konfiguration ausgebildet ist. Er weist eine L-förmige Gestaltung mit zwei Schenkeln 2, 3 und einem zwischen den Schenkeln 2, 3 befindlichen bogenförmig gekrümmten Längenbereich 4 auf.

Am Ende des Schenkels 2 ist eine Aufnahme 5 für ein nicht näher veranschaulichtes Kugelgelenk vorgesehen. Das Ende des Schenkels 3 ist als Aufnahme 6 für ein ebenfalls nicht näher veranschaulichtes Gummilager ausgebildet.

Des Weiteren ist aus der Figur 1 zu erkennen, dass am äußeren Umfang des gekrümmten Längenbereichs 4 ein Fortsatz 7 vorgesehen ist, welcher der Festlegung eines schematisch angedeuteten Gummilagers 8 dient.

Der Lenker 1 setzt sich gemäß den Figuren 3 und 4 zwischen den endseitigen Aufnahmen 5, 6 aus einer U-förmigen Schale 9 und einem zwischen die freien Enden 10 der Schenkel 11 der Schale 9 geschweißten ebenen Querblech 12 zusammen. Der Boden 13 der Schale 9 ist mit einer Längssicke 14 versehen.

Im mittleren gekrümmten Längenbereich 4 (Figuren 1, 3 und 4) wird der Lenker 1 durch ein seinen Innenraum 15 im Bereich zwischen dem Boden 13 der Schale 9 und dem Querblech 12 durchsetzenden, ebenfalls zwischen die Schenkel 11 geschweißten Verstärkungsblech 16 versteift. Das Verstärkungsblech 16 wird vor dem Einschweißen des Querblechs 12 an den Schenkeln 11 befestigt. Stirnseitig ist das Verstärkungsblech 16 mit halbrunden Aussparungen 17 versehen.

### Bezugszeichenaufstellung

- 1 -: Lenker
- 2 -: Schenkel v. 1
- 3 -: Schenkel v. 1
- 4 -: Längenbereich v. 1
- 5 -: Aufnahme an 2
- 6 -: Aufnahme an 3
- 7 -: Fortsatz an 4
- 8 -: Gummilager an 7
- 9 -: Schale v. 1
- 10 -: freie Enden v. 11
- 11 -: · Schenkel v. 9
- 12 -: Querblech
- 13 -: Boden v. 9
- 14 -: Längssicke in 13
- 15 -: Innenraum v. 1
- 16 -: Verstärkungsblech
- 17 -: Aussparungen an 16

## Patentansprüche

1. Lenker als Fahrwerkskomponente für ein Kraftfahrzeug, der als hohle Stahl-Konfiguration aus wenigstens teilweise gepressten, miteinander verschweißten Stahlblechen (9, 12) gebildet und mindestens abschnittsweise mit einem die Knicksteifigkeit erhöhenden inneren Verstärkungsblech (16) versehen ist.

2. Lenker nach Anspruch 1, der aus einer U-förmig gemuldeten Schale (9), einem an die freien Enden (10) der Schenkel (11) der Schale (9) geschweißten Querblech (12) oder einer U-förmigen Gegenschale und einem seinen Innenraum (15) im Bereich zwischen dem Boden (13) der Schale (9) und dem Querblech (12) bzw. der Gegenschale durchsetzenden, zwischen die Schenkel (11) geschweißten Verstärkungsblech (16) gebildet ist.

3. Lenker nach Anspruch 1 oder 2, der als etwa L-förmig konfigurierter Querlenker (1) gestaltet und bei welchem das Verstärkungsblech (16) in den mittleren gekrümmten Längenbereich (4) eingeschweißt ist.
